# FASCICULE DE BREVET EUROPEEN

(11) **EP 1 815 743 B1**
(45) Date de publication et mention de la délivrance du brevet: **29.04.2009**
(21) Numéro de dépôt: 07364003.9
(22) Date de dépôt: 19.01.2007
(51) Int. Cl.: A22B 5/00

(54) **Système de détection de corps étrangers dans un outil de découpe de rectum d'un animal**
Fremdkörperdetektierung in einer Vorrichtung zum Freischneiden des Enddarms von Schlachttieren
Detection of objects in a cutting assembly for separating the rectum from the cadaver of a slaughtered animal

(30) Priorité: 06.02.2006 FR 0601068
(43) Date de publication de la demande: 08.08.2007
(73) Titulaire: Couedic Madore Equipement, 22210 Plemet (FR)
(72) Inventeur: Le Maux, Robert, 22600 Loudeac (FR); Le Guennec, Laurent, 56500 Plumelin (FR)
(74) Mandataire: Bentz, Jean-Paul

(56) Documents cités:
- EP-A- 0 492 735
- EP-A- 0 723 743
- DE-U1-2202005 012 12
- PATENT ABSTRACTS OF JAPAN vol. 2003, no. 05, 12 mai 2003 (2003-05-12) & JP 2003 016893 A (ASA DENSHI KOGYO KK), 17 janvier 2003 (2003-01-17)

## Description

La présente invention concerne un dispositif de découpe du rectum d'un animal après abattage, en particulier d'un porc suspendu par les pattes arrière, équipé d'un système de détection de corps étrangers dans l'outil de découpe de rectum, et un système de détection de corps étranger correspondant.

Il est connu, cf. par example EP-723 743, des dispositifs de découpe du rectum d'un porc suspendu par les pattes arrière, comprenant un outil de découpe du rectum assemblé sur un système de déplacement, lequel outil de découpe comporte un couteau tubulaire rotatif apte à réaliser une découpe autour de l'anus de l'animal. En fonctionnement, le couteau tubulaire est entraîné en rotation et avancé vers l'anus de l'animal pour effectuer une découpe de profondeur déterminée. Un tel outil comprend généralement une canule coaxiale pour guider le positionnement de l'outil par rapport à l'anus de l'animal avant la découpe et permettre le retrait par aspiration du rectum après la découpe. Pour respecter les normes en vigueur dans certains pays, l'outil de découpe est généralement déplacé vers une unité de stérilisation entre les opérations de découpe.

Lors de la découpe, il arrive que des déchets, tels qu'un rectum ou morceau de la queue, viennent se bloquer dans la cavité interne du couteau tubulaire, au niveau de sa base. Ces déchets peuvent empêcher la réalisation de découpes ultérieures ou affecter la qualité des découpes ultérieures. Lorsque l'outil est équipé d'un système d'aspiration, ces déchets peuvent empêcher la remontée du rectum dans la cavité de la lame, altérant ainsi la découpe. En outre, lorsque l'outil est entraîné en rotation, ces déchets créent des vibrations qui peuvent détériorer l'outil. A ce jour, l'opérateur stoppe le dispositif de découpe pour procéder au nettoyage de l'outil de découpe ou à son remplacement lorsqu'il repère visuellement un déchet dépassant de l'outil, ou lorsque le fonctionnement de l'outil s'avère manifestement défectueux.

Le but de la présente invention est de proposer une solution, palliant les inconvénients précités, qui garantissent un traitement efficace des animaux, et qui soit adapté aux cadences rapides de traitement des carcasses d'animaux dans les abattoirs.

Dans ce but, la présente invention a pour objet un dispositif de découpe du rectum d'un animal après abattage, en particulier d'un porc suspendu par les pattes arrière, comprenant un outil de découpe du rectum assemblé sur un système de déplacement, lequel outil de découpe comporte un couteau tubulaire rotatif pour réaliser une découpe autour de l'anus de l'animal, caractérisé en ce que ledit dispositif comprend en outre un système de détection pour détecter automatiquement la présence de corps étrangers dans la cavité interne du couteau tubulaire après une opération de découpe.

Selon une particularité, le dispositif de découpe comprend en outre une unité de changement de couteau tubulaire vers laquelle l'outil de découpe est déplacé par le système de déplacement lorsqu'un corps étranger a été détecté par ledit système de détection, pour effectuer au moins le retrait du couteau tubulaire et son remplacement par un nouveau couteau tubulaire. Selon l'invention, la détection d'un corps étranger entraîne le retrait et le remplacement du couteau tubulaire de l'outil de découpe, ou le retrait et le remplacement de l'outil de découpe complet.

Selon une autre particularité, le système de détection comprend un élément de détection de forme tubulaire apte à rentrer en totalité dans la cavité interne du couteau tubulaire, l'extrémité libre du tube de détection en vis-à-vis de l'embase du couteau tubulaire, par déplacement relatif du couteau tubulaire et de l'élément de détection, ledit système détectant la présence de corps étranger lorsque l'élément de détection ne peut rentrer en totalité dans la cavité interne. La présente invention propose un système de détection mécanique robuste, fiable et simple à mettre en oeuvre. Le système de déplacement comporte avantageusement un robot muni d'un bras à six axes, l'outil étant apte à être assemblé à l'extrémité dudit bras.

Selon un mode de réalisation, le système de détection comprend une unité de détection vers laquelle l'outil de découpe est déplacé dans une position de détection après chaque découpe, ladite unité de détection comportant un tube escamotable sollicité par des moyens de rappel élastique vers une position de repos, sur lequel le couteau tubulaire vient s'emmancher dans la position de détection de l'outil de découpe, et un capteur apte à détecter un déplacement du tube escamotable depuis sa position de repos. Dans ce mode de réalisation, l'outil vient ainsi s'emmancher sur un tube escamotable d'une unité de détection après chaque découpe, la présence de corps étranger dans le couteau tubulaire entraînant un déplacement du tube escamotable qui est détecté par un capteur. L'outil de découpe comprend avantageusement une canule coaxiale de positionnement et d'aspiration présentant une extrémité libre disposée en saillie par rapport au bord de coupe circulaire du couteau tubulaire, et une entrée de mise sous vide en communication avec la cavité interne du couteau tubulaire et/ou le canal interne de la canule, ladite entrée étant destinée à la connexion dudit outil à une pompe à vide pour la remontée par aspiration du rectum dans la lame lors de la découpe, ladite canule pénétrant dans le tube de détection dans la position de détection de l'outil de découpe.

Selon une autre particularité, ladite unité de détection comprend une enceinte dans laquelle sont montés ledit tube de détection et des moyens de stérilisation, ladite unité de découpe constituant une unité de stérilisation. L'intégration du système de détection au sein d'une unité de stérilisation permet d'effectuer simultanément l'étape de détection et l'étape de stérilisation, et permet ainsi de proposer un dispositif de découpe répondant aux normes et aux cadences élevées de traitement des carcasses d'animaux dans les abattoirs.

Avantageusement, ledit tube de détection est constitué d'un tube à double paroi formant un gicleur pour la pulvérisation d'un fluide de stérilisation dans la cavité interne du couteau tubulaire.

Dans un mode de réalisation, le tube de détection est solidaire d'un tube intermédiaire équipé de bagues et monté coulissant dans un tube fixe de guidage équipé de paliers de glissement, les moyens de rappel élastique comprennent un ressort de traction, fixé à l'extrémité inférieure du tube intermédiaire et à l'extrémité supérieure du tube fixe de guidage, sollicitant élastiquement le tube de détection dans sa position de repos, les bagues en butée contre les paliers de glissement, ledit capteur détectant le déplacement du tube intermédiaire par rapport au tube fixe de guidage.

L'invention a également pour objet un système de détection pour un dispositif de découpe tel que décrit précédemment, caractérisé en ce qu'il comprend une unité de détection comportant un tube escamotable sollicité par des moyens de rappel élastique vers une position de repos, et un capteur apte à détecter un déplacement du tube escamotable depuis sa position de repos. Ladite unité de détection comporte avantageusement une enceinte dans laquelle sont montés ledit tube de détection et des moyens de stérilisation, et/ou ledit tube de détection est avantageusement constitué d'un tube à double paroi formant un gicleur pour la pulvérisation d'un fluide de stérilisation dans la cavité interne du couteau tubulaire.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence au dessin schématique annexé sur lequel:
- la figure 1 représente schématiquement un dispositif de découpe selon l'invention pour le traitement de carcasses de porcs suspendues à un convoyeur;
- les figures 2 et 3 représentent des vues schématiques en coupe de l'unité de détection du dispositif de la figure 1, respectivement en l'absence et en présence d'un corps étranger dans l'outil de découpe ;
- la figure 4 représente une vue agrandie partielle de l'unité de détection de la figure 2 illustrant les extrémités supérieure et inférieure du tube fixe de guidage ; et
- la figure 5 représente une vue en coupe agrandie du tube de détection de l'unité de détection de la figure 3.

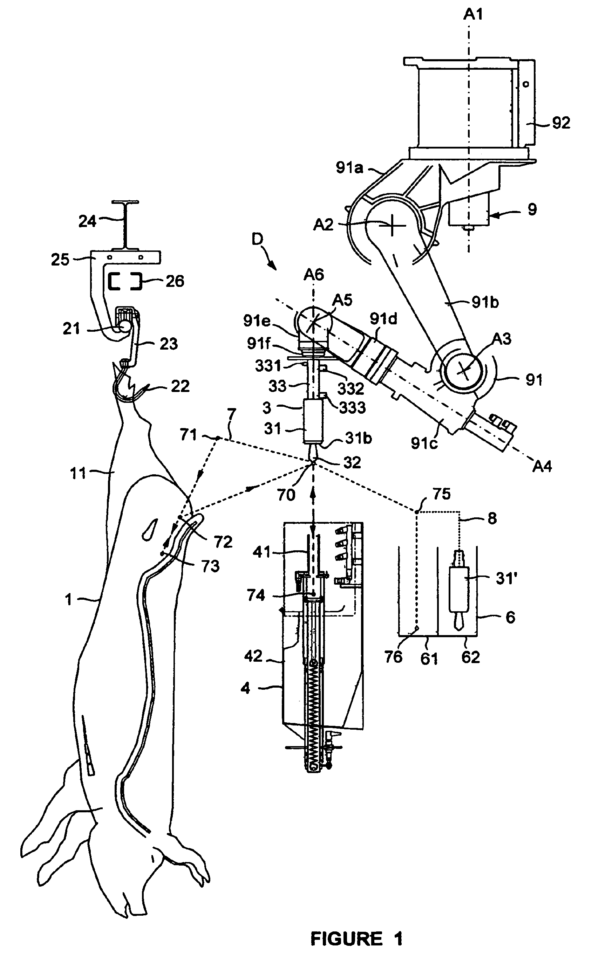

Dans l'exemple illustré sur la figure 1, le dispositif de découpe D selon l'invention est destiné au traitement de carcasses de porc 1 se déplaçant le long du rail 21 d'un convoyeur aérien 2. Bien entendu, l'invention n'est pas limitée au traitement de cet animal et peut s'appliquer à d'autres animaux de boucherie, notamment aux bovins. Les porcs abattus sont suspendus au rail 21 par les pattes arrière 11 au moyen de crochets de suspension 22 solidaires de chariots de roulement 23, lesdits chariots étant engagés sur le rail et entraînés le long de ce dernier par des entraîneurs (non représentés) montés à intervalle régulier sur une chaîne sans fin passant dans un guide 26. Le dispositif de découpe D est disposé latéralement, de préférence au niveau d'un tronçon rectiligne du convoyeur 2, les animaux étant suspendus de sorte que leur dos soient disposés en vis-à-vis du dispositif D. Le rail est suspendu à des éléments de charpente 24 du bâtiment, tels que des poutres en I, par l'intermédiaire de chaises support 25 disposées à intervalle régulier.

Le dispositif de découpe comprend un outil de découpe 3 monté à l'extrémité du bras 91 d'un robot 9 à six axes, de type connu, assurant le déplacement dans l'espace de l'outil de découpe. Le robot comprend une embase 92 montée fixe sur un élément de charpente. Le bras 91 du robot est monté mobile en rotation sur ladite embase autour d'un axe vertical A1, et comprend différentes portions 91a-91f montées mobiles les unes aux autres autour d'axes de rotation A2-A6, l'outil de découpe étant fixé à la portion d'extrémité 91f du bras. Les mouvements du bras sont commandés par un calculateur paramétrable d'une unité de contrôle (non représentée), de sorte que l'outil de découpe puisse se déplacer en synchronisme avec le déplacement des animaux suspendus. L'outil de découpe est déplacé parallèlement au rail, depuis une position initiale, en synchronisme avec un animal pour le découper puis est ramené en arrière à sa position initiale pour la découpe de l'animal suivant.

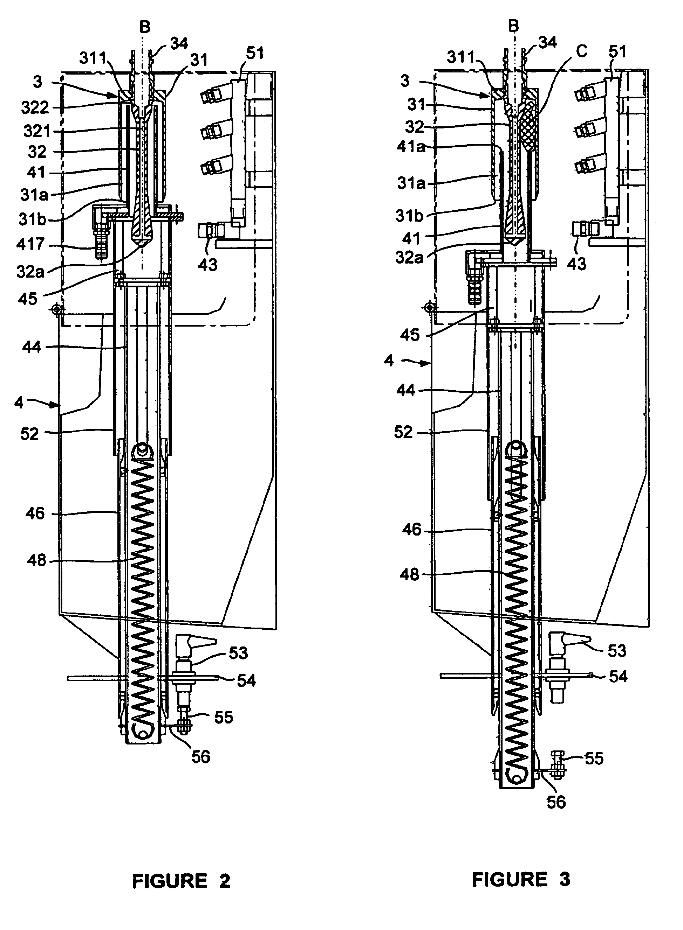

En référence aux figures 1 et 2, l'outil de découpe 3, prévu pour la découpe et le retrait du rectum de l'animal, comprend un couteau rotatif tubulaire ou lame cylindrique de type cloche 31, une tige centrale creuse de positionnement et d'aspiration ou canule 32, montée sur l'embase 311 du couteau tubulaire et s'étendant axialement dans la cavité interne 31a du couteau tubulaire, l'extrémité libre de la canule étant saillante devant le bord de coupe circulaire 31b du couteau tubulaire et munie d'une tête sphérique ou conique 32a de positionnement et d'aspiration. Le couteau tubulaire est monté mobile en rotation sur une base tubulaire 33 contenant des moyens d'entraînement en rotation dudit couteau tubulaire, ladite base tubulaire étant assemblée sur la portion d'extrémité 91f du robot. Le couteau tubulaire est équipé d'une douille 34 pour un assemblage rapide par encliquetage sur la base tubulaire. L'assemblage est par exemple de type baïonnette, obtenu par maintien du couteau tubulaire et rotation de la base tubulaire. Le couteau tubulaire est par exemple du type à air comprimé, la base comprenant une entrée d'alimentation 331 destinée à être connectée à un moteur à air comprimé (non représenté), et une sortie 332 pour l'échappement de l'air comprimé. La base tubulaire comprend en outre une entrée 333 de mise sous vide, venant en communication avec le canal interne 321 de la canule et avec la cavité interne 31a du couteau tubulaire via des passages 322, et destinée à être connectée à une pompe à vide pour l'aspiration à l'intérieur du rectum et dans la cavité de la lame lors de la découpe.

Le dispositif de découpe comprend une unité de détection et de stérilisation 4 pour la détection de corps étrangers dans la cavité interne du couteau tubulaire et pour le nettoyage et la stérilisation du couteau tubulaire et de la canule entre deux opérations de découpe. Cette unité 4 comprend un tube de détection escamotable 41 monté verticalement dans une enceinte de stérilisation 42 ouverte sur le dessus pour le passage de l'outil de découpe. Dans le présent mode de réalisation, le tube de détection constitue un gicleur pour la pulvérisation d'un fluide de stérilisation dans la cavité interne du couteau tubulaire.

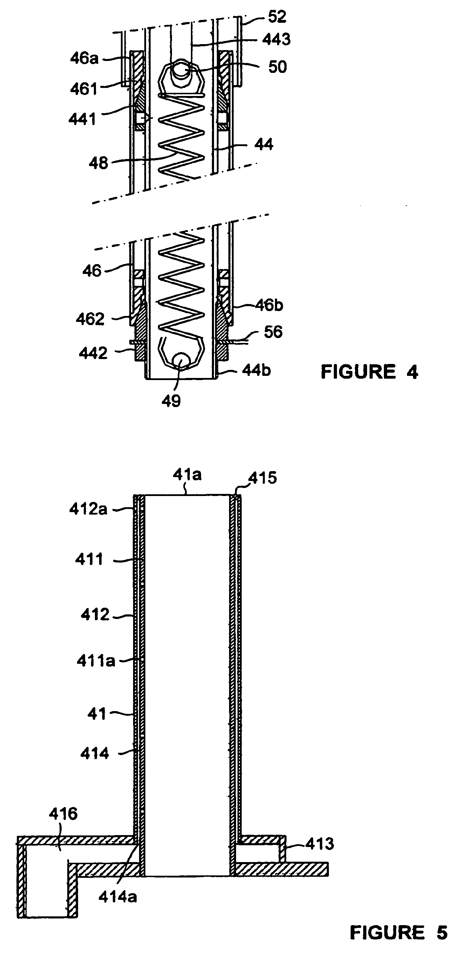

Comme mieux visible à la figure 5, le tube de détection 41 est formé d'un tube à double paroi, avec une paroi interne 411 et une paroi externe 412 montées sur une base 413. Les deux parois définissent entre elles un canal 414 dont l'ouverture annulaire supérieure à l'extrémité libre 41a du tube de détection est obturée de manière étanche par un joint annulaire 415, l'ouverture annulaire inférieure 414a débouchant sur un passage d'alimentation 416 formé dans la base. La paroi interne comprend des trous traversants 411a pour la pulvérisation de fluide de stérilisation sur la canule lorsque l'outil de découpe est amené dans l'unité de détection dans une position dite de détection illustrée aux figures 2 et 3. A titre d'exemple, lesdits trous sont répartis à intervalle régulier selon une ligne verticale sur la hauteur de la paroi interne, l'outil de découpe étant entraîné en rotation dans sa position de détection. La paroi externe comprend au niveau de son extrémité supérieure un ensemble de trous 412a disposés à intervalle angulaire régulier pour la pulvérisation de fluide de stérilisation contre la surface interne du couteau tubulaire. En référence à la figure 2, l'entrée du passage 416 est raccordée, via un raccord 417 (figure 1) et une conduite (non représentée), à une rampe 43 de distribution de fluide de stérilisation montée dans l'enceinte.

En référence aux figures 2 et 3, le tube de détection est monté escamotable dans l'enceinte au moyen d'un tube intermédiaire 44 auquel il est assemblé via une pièce de raccord tubulaire 45, ledit tube intermédiaire étant monté coulissant dans un tube fixe de guidage 46 assemblé de manière fixe dans l'enceinte. Le tube de détection est assemblé par sa base sur la pièce de raccord.

Comme mieux visible sur la figure 4, le tube de guidage 46 comprend un palier de glissement interne supérieur 461 et un palier de glissement interne inférieur 462 assemblés respectivement à son extrémité supérieure 46a et à son extrémité inférieure 46b pour guider le tube intermédiaire. Le tube intermédiaire 44 est muni d'une bague supérieure 441 et d'une bague inférieure 442 venant en butée respectivement contre le palier inférieur et le palier supérieur dans une position dite de repos du tube de détection. Des moyens de rappel élastique sont prévus pour solliciter élastiquement le tube de détection dans sa position de repos, les bagues en butée contre les paliers. Dans le présent mode de réalisation, un ressort de traction 48 est monté dans le tube intermédiaire, avec une première extrémité fixée au moyen d'un premier pion 49 à l'extrémité inférieure 44b du tube intermédiaire, et sa deuxième extrémité fixée à l'extrémité supérieure 46a du tube de guidage au moyen d'un second pion 50, solidaire du tube de guidage et passant dans deux fentes longitudinales opposées 443 du tube intermédiaire. Le tube de détection peut ainsi être déplacé depuis sa position de repos vers le bas, à l'encontre du ressort de traction. Lors de ce déplacement, le tube intermédiaire 44, guidé par les paliers 461, 462, coulisse vers le bas dans le tube de guidage 46, le second pion 50 supérieur se déplaçant dans les fentes 443. Les bagues 441, 442 présentent avantageusement des surfaces coniques par lesquelles les bagues viennent en butée contre des surfaces coniques inférieures complémentaires des paliers 461, 462.

Une rampe verticale 51 de buses de pulvérisation est montée dans l'enceinte pour le nettoyage et la stérilisation de la surface externe du couteau tubulaire. Pour protéger le mécanisme de rappel élastique des projections et ruissellements de fluide de stérilisation, un tube externe 52 est monté sur la pièce de raccord 45 pour recouvrir au moins l'extrémité supérieure du tube de guidage dans la position de repos du tube de détection.

Un capteur 53 relié à l'unité de contrôle du robot permet de détecter le déplacement du tube de détection depuis sa position de repos. A titre d'exemple le capteur utilisé est un capteur inductif de type tout ou rien monté fixe par rapport au tube de guidage, par exemple au moyen d'une bride 54, qui détecte le déplacement d'un plot métallique 55 monté à l'extrémité inférieure du tube intermédiaire, par exemple au moyen d'une bride 56. Dans la position de repos du tube de détection illustrée à la figure 2, le plot est en contact avec le capteur inductif. Dès que le tube de détection quitte sa position de repos, le plot s'éloigne du capteur inductif tel qu'illustré à la figure 3, et le capteur émet un signal à l'unité de contrôle du robot.

En référence à la figure 1, le dispositif comprend en outre une unité de changement de couteau tubulaire 6 comprenant un premier poste 61 pour le retrait automatique du couteau assemblé à l'extrémité du bras lorsque l'unité de détection a détecté un corps étranger, et au moins un deuxième poste 62 pour l'assemblage automatique d'un nouvel outil.

Une description détaillée du fonctionnement du dispositif de découpe selon l'invention va à présent être effectuée en référence à la figure 1, sur laquelle le trajet 7 suivi par la tête de la canule, dans un plan perpendiculaire à la direction d'avancement des animaux, est représenté en traits discontinus. Des positions caractéristiques de ce trajet sont référencées de 70 à 76.

De la position initiale 70 illustrée à la figure 1, dans laquelle l'axe du couteau tubulaire rotatif est disposé sensiblement verticalement, l'outil de découpe est déplacé vers une position d'attente 71 inclinée dans laquelle l'outil de découpe 3 est disposé au-dessus et à distance de l'anus des animaux 1 transportés par le convoyeur 2, tout en étant décalée latéralement par rapport à leurs pattes arrière 11. L'axe du couteau tubulaire est incliné d'environ 35° par rapport à la verticale et disposé sensiblement selon l'axe de l'anus des animaux. Lorsqu'un animal 1 est détecté en vis-à-vis du dispositif, l'outil de découpe est déplacé avec la même inclinaison vers le bas en direction de l'anus de l'animal, tout en suivant l'avancement de l'animal sur le convoyeur, jusqu'à la position 72 dans laquelle la canule est engagée dans l'anus de l'animal, le couteau tubulaire en vis-à-vis de l'anus. A partir de cette position 72, le couteau tubulaire est entraîné en rotation et est mis sous vide pour vider par aspiration le rectum par la canule. L'outil est avancé vers le bas jusqu'à la position 73 pour réaliser une découpe circulaire autour de l'anus sur une profondeur déterminée. Lors de ce déplacement, le rectum rentre dans la lame par effet d'aspiration. Ensuite le vide et la rotation de la lame sont arrêtés à la position 73. Le couteau tubulaire est alors retiré de l'animal jusqu'à la position 72 précitée. Bien entendu, lors des opérations de découpe et de retrait, l'outil de découpe se déplace en synchronisme avec la vitesse d'avancement de l'animal. L'outil de découpe est ramené vers la position initiale 70. Lors de ce déplacement de la position 72 à 70, le bras qui déplaçait l'outil de découpe en synchronisme avec l'avancement de l'animal depuis sa détection, ramène l'outil de découpe en arrière parallèlement au convoyeur pour le traitement du prochain animal transporté par le convoyeur.

Le couteau tubulaire est ensuite amené depuis la position initiale 70 jusqu'à la position de détection 74. L'unité de détection et de stérilisation est par exemple disposée de sorte que le couteau tubulaire dans sa position initiale 70 soit disposé selon l'axe B du tube de détection, le couteau tubulaire étant alors simplement descendu verticalement de sa position initiale vers sa position de détection 74. Lors de ce déplacement, la canule pénètre dans le tube de détection, le couteau tubulaire est entraîné en rotation, et la pulvérisation par la rampe de buses 51 et les trous 411a et 412a du tube de détection est activée. La position de détection 74 du couteau tubulaire est définie de sorte que, lorsque le tube de détection est dans sa position de repos et en l'absence de corps étranger dans le couteau tubulaire, le tube de détection est sans contact avec le couteau tubulaire, l'extrémité libre 41a du tube de détection à proximité de l'embase 311 du couteau tubulaire, le bord de coupe 31b à proximité de la face supérieure de la base 413, la canule traversant la base, avec sa tête 32a disposée dans la pièce de raccordement tubulaire 45. En l'absence de corps étranger, le tube de détection reste dans sa position de repos, l'unité de contrôle commande alors le déplacement de l'outil de découpe vers sa position d'attente 71 en passant par sa position initiale pour le traitement du prochain animal.

En référence à la figure 3, lorsque l'outil de découpe est amené dans sa position de détection et qu'un corps étranger C est resté bloqué dans le couteau tubulaire, le tube de détection vient en butée par son extrémité libre 41a contre ledit corps étranger et est déplacé vers le bas à l'encontre du ressort de traction. Le déplacement du tube de détection est détecté par le capteur 53. Le capteur émet alors un signal vers l'unité de contrôle qui, après une éventuelle temporisation, commande le retrait de l'outil hors de l'unité de détection et le déplacement de l'outil vers l'unité de changement 6 en passant par sa position initiale. Lors de ce retrait, le tube de détection revient vers sa position de repos sous l'effet du ressort 48.

Pour le changement d'outil, l'outil est déplacé de la position initiale vers une position 75 dans laquelle il est disposé verticalement au dessus du premier poste 61, puis est déplacé dans ledit poste jusqu'à la position 76 pour le retrait automatique par dés-encliquetage du couteau tubulaire. Le couteau est par exemple saisi par des moyens appropriés dudit premier poste puis la base tubulaire 33 est pivotée par exemple d'un quart de tour et ramenée vers la position 75. La base 33 sans couteau tubulaire est ensuite déplacée vers le deuxième poste 62, selon le trajet 8 illustré en pointillés pour l'assemblage automatique d'un nouveau couteau tubulaire 31' par encliquetage. La base avec le nouveau couteau est ensuite ramenée vers la position d'attente 71 en passant par la position 75 et la position initiale 70 pour le traitement du prochain animal. Une alarme sonore et/ou visuelle est avantageusement déclenchée automatiquement avant, pendant et/ou après les opérations de changement d'outils pour procéder au nettoyage du couteau déposé dans le premier poste et au placement d'un nouveau couteau dans le deuxième poste.

Selon une variante de réalisation, un remplacement de l'outil de découpe complet, à savoir de la base tubulaire et du couteau tubulaire, est réalisé lorsqu'un un corps étranger a été détecté. Dans ce cas, la base tubulaire 33 est montée par des moyens d'assemblage rapide, par exemple par encliquetage, sur la portion d'extrémité 91f du robot. Chaque outil de découpe possède alors ses propres systèmes de connexion pour la connexion à une pompe à vide et l'alimentation en air comprimé de sa base tubulaire.

En variante, lorsqu'un corps étranger est détecté, le signal transmis par le capteur à l'unité de contrôle déclenche une alarme sonore et/ou visuelle pour qu'un nettoyage ou un remplacement manuel du couteau soit effectué. Dans une autre variante de réalisation, le tube de détection est constitué d'un simple tube sans moyens de pulvérisation, monté par exemple coulissant dans un tube de guidage équipé d'un ressort de compression pour solliciter le tube dans sa position de repos.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif de découpe du rectum d'un animal (1) après abattage, en particulier d'un porc suspendu par les pattes arrière (11), comprenant un outil de découpe du rectum (3) assemblé sur un système de déplacement (9), lequel outil de découpe comporte un couteau tubulaire rotatif (31) pour réaliser une découpe autour de l'anus de l'animal, **caractérisé en ce que** ledit dispositif comprend en outre un système de détection (4) pour détecter la présence de corps étrangers (C) dans la cavité interne (31a) du couteau tubulaire après une opération de découpe.

2. Dispositif selon la revendication 1, **caractérisé en ce qu'**il comprend une unité de changement de couteau tubulaire (6) vers laquelle l'outil de découpe est déplacé par le système de déplacement (9) lorsqu'un corps étranger (C) a été détecté par ledit système de détection, pour effectuer au moins le retrait du couteau tubulaire et son remplacement par un nouveau couteau tubulaire (31').

3. Dispositif selon la revendication 1 ou 2, **caractérisé en ce que** le système de détection comprend un élément de détection (41) de forme tubulaire apte à rentrer en totalité dans la cavité interne (31a) du couteau tubulaire par déplacement relatif du couteau tubulaire et de l'élément de détection, ledit système détectant la présence de corps étranger (C) lorsque l'élément de détection ne peut rentrer en totalité dans la cavité interne.

4. Dispositif selon la revendication 3, **caractérisé en ce que** le système de détection comprend une unité de détection (4) vers laquelle l'outil de découpe (3) est déplacé dans une position de détection après chaque découpe, ladite unité de détection comportant un tube escamotable (41), sollicité par des moyens de rappel élastique (48) vers une position de repos, sur lequel le couteau tubulaire (31) vient s'emmancher dans la position de détection de l'outil de découpe, et un capteur (53) apte à détecter un déplacement du tube escamotable depuis sa position de repos.

5. Dispositif selon la revendication 4, **caractérisé en ce que** ladite unité de détention comprend une enceinte (42) dans laquelle sont montés ledit tube de détection (41) et des moyens de stérilisation (41, 51), ladite unité de détection constituant une unité de stérilisation.

6. Dispositif selon la revendication 5, **caractérisé en ce que** ledit tube de détection (41) est constitué d'un tube à double paroi formant un gicleur pour la pulvérisation d'un fluide de stérilisation dans la cavité interne du couteau tubulaire.

7. Dispositif selon l'une des revendications 4 à 6, **caractérisé en ce que** le tube de détection (41) est solidaire d'un tube intermédiaire (44) équipé de bagues (441, 442) et monté coulissant dans un tube fixe de guidage (44) équipé de paliers de glissement (461, 462), les moyens de rappel élastique comprennent un ressort de traction (48), fixé à l'extrémité inférieure (44b) du tube intermédiaire et à l'extrémité supérieure (46a) du tube fixe de guidage, sollicitant élastiquement les bagues en butée contre les paliers de glissement, ledit capteur détectant le déplacement du tube intermédiaire par rapport au tube fixe de guidage.

8. Système de détection pour un dispositif de découpe selon l'une des revendications 1 à 7**, caractérisé en ce qu'**il comprend une unité de détection (4) comportant un tube escamotable (41) sollicité par des moyens de rappel élastique vers une position de repos, et un capteur (53) apte à détecter un déplacement du tube escamotable depuis sa position de repos, ladite unité de détection (4) comprenant une enceinte (42) dans laquelle sont montés ledit tube de détection (41) et des moyens de stérilisation (41, 51).

9. Système de détection selon la revendication 8, **caractérisé en ce que** ledit tube de détection (41) est constitué d'un tube à double paroi formant un gicleur pour la pulvérisation d'un fluide de stérilisation dans la cavité interne du couteau tubulaire.

10. Système de détection selon la revendication 8 ou 9, **caractérisé en ce que** le tube de détection (41) est solidaire d'un tube intermédiaire (44) équipé de bagues (441, 442) et monté coulissant dans un tube fixe de guidage (44) équipé de paliers de glissement (461, 462), les moyens de rappel élastique comprennent un ressort de traction (48), fixé à l'extrémité inférieure (44b) du tube intermédiaire et à l'extrémité supérieure (46a) du tube fixe de guidage, sollicitant élastiquement les bagues en butée contre les paliers de glissement, ledit capteur détectant le déplacement du tube intermédiaire par rapport au tube fixe de guidage.

## Claims

1. Device for cutting out the rectum of an animal (1) after slaughter, particularly a pig suspended by the hind legs (11), comprising a rectum cutting tool (3) assembled on a motion system (9), which cutting tool comprises a rotary tubular knife (31) for cutting around the animal's anus, which device is **characterized in that** it also comprises a detection system (4) for detecting the presence of foreign bodies (C) in the internal cavity (31a) of the tubular knife after a cutting operation.

2. Device according to Claim 1, **characterized in that** it comprises a tubular-knife changing unit (6) to which the cutting tool is moved by the motion system (9) when a foreign body (C) has been detected by said detection system, in order at least to withdraw the tubular knife and replace it with a new tubular knife (31').

3. Device according to Claim 1 or 2, **characterized in that** the detection system comprises a tubular detection part (41) capable of fitting completely into the internal cavity (31a) of the tubular knife by relative movement between the tubular knife and the detection part, which system detects the presence of foreign bodies (C) when the detection part cannot fit completely into the internal cavity.

4. Device according to Claim 3, **characterized in that** the detection system comprises a detection unit (4) to which the cutting tool (3) is moved in a detection position after each cutting operation, said detection unit comprising a retractable tube (41), urged by elastic return means (48) to a rest position, on to which the tubular knife (31) is fitted when the cutting tool is in the detection position, and a sensor (53) capable of detecting movement of the retractable tube away from its rest position.

5. Device according to Claim 4, **characterized in that** said detection unit comprises a chamber (42) in which are mounted said detection tube (41) and sterilization means (41, 51), said detection unit constituting a sterilization unit.

6. Device according to Claim 5, **characterized in that** said detection tube (41) is a double-walled tube forming a nozzle for spraying a sterilizing fluid into the internal cavity of the tubular knife.

7. Device according to one of Claims 4 to 6, **characterized in that** the detection tube (41) is connected to an intermediate tube (44) provided with rings (441, 442) and able to slide in a fixed guide tube (44) provided with sliding bearings (461, 462), and the elastic return means comprise a tension spring (48) fixed to the lower end (44b) of the intermediate tube and to the upper end (46a) of the fixed guide tube, urging the rings elastically into abutment against the sliding bearings, said sensor detecting movement of the intermediate tube relative to the fixed guide tube.

8. Detection system for a cutting device according to one of Claims 1 to 7, **characterized in that** it comprises a detection unit (4) comprising a retractable tube (41) urged by elastic return means to a rest position, and a sensor (53) capable of detecting movement of the retractable tube away from its rest position, said detection unit (4) comprising a chamber (42) in which are mounted said detection tube (41) and sterilizing means (41, 51).

9. Detection system according to Claim 8, **characterized in that** said detection tube (41) is a double-walled tube forming a nozzle for spraying a sterilizing fluid into the internal cavity of the tubular knife.

10. Detection system according to Claim 8 or 9, **characterized in that** the detection tube (41) is connected to an intermediate tube (44) provided with rings (441, 442) and able to slide in a fixed guide tube (44) provided with sliding bearings (461, 462), and the elastic return means comprise a tension spring (48) fixed to the lower end (44b) of the intermediate tube and to the upper end (46a) of the fixed guide tube, urging the rings elastically into abutment against the sliding bearings, said sensor detecting movement of the intermediate tube relative to the fixed guide tube.

## Patentansprüche

1. Vorrichtung zum Freischneiden des Enddarms eines Tieres (1) nach der Schlachtung, insbesondere eines an den Hinterfüßen (11) aufgehängten Schweins, mit einem Enddarmfreischneidewerkzeug (3), das an einer Verlagerungseinrichtung (9) montiert ist, welches Freischneidewerkzeug ein rohrförmiges Rotationsschneidmesser (31) zum Ausführen eines Schnitts um den Anus des Tieres aufweist, **dadurch gekennzeichnet, dass** die Vorrichtung ferner eine Erfassungseinrichtung (4) zum Erfassen des Vorhandenseins von Fremdkörpern (C) in dem Innenhohlraum (31a) des rohrförmigen Schneidmessers nach einem Schneidvorgang aufweist.

2. Vorrichtung nach Anspruch 1, **dadurch gekennzeichnet, dass** sie eine Einheit (6) zum Wechseln des rohrförmigen Schneidmessers aufweist, zu der das Schneidwerkzeug mittels der Verlagerungseinrichtung (9) hin verlagert wird, wenn ein Fremdkörper (C) von der Erfassungseinrichtung erfasst wurde, um zumindest den Rückzug des rohrförmigen Schneidmessers und dessen Austausch durch ein neues rohrförmiges Schneidmesser (31') durchzuführen.

3. Vorrichtung nach Anspruch 1 oder 2, **dadurch gekennzeichnet, dass** die Erfassungseinrichtung ein rohrförmiges Erfassungselement (41) aufweist, das durch relative Verlagerung des rohrförmigen Schneidmessers und des Erfassungselements vollständig in den Innenhohlraum (31a) des rohrförmigen Schneidmessers hineinpasst, wobei die Einrichtung das Vorhandensein von Fremdkörpern (C) dann erfasst, wenn das Erfassungselement nicht vollständig in den Innenhohlraum hineinpasst.

4. Vorrichtung nach Anspruch 3, **dadurch gekennzeichnet, dass** die Erfassungseinrichtung eine Erfassungseinheit (4) aufweist, zu der das Schneidwerkzeug (3) nach jedem Schnitt in eine Erfassungsstellung hin verlagert wird, wobei die Erfassungseinheit eine einziehbare Röhre (41) aufweist, die von elastischen Rückstellmitteln (48) in eine Ruhestellung beaufschlagt wird und auf welche das rohrförmige Schneidmesser (31) in der Erfassungsstellung des Schneidwerkzeugs aufgesteckt wird, sowie einen Sensor (53), der eine Verlagerung der einziehbaren Röhre aus ihrer Ruhestellung erfassen kann.

5. Vorrichtung nach Anspruch 4, **dadurch gekennzeichnet, dass** die Erfassungseinheit ein Gehäuse (42) aufweist, in welchem die Erfassungsröhre (41) und Sterilisationsmittel (41, 51) angeordnet sind, wobei die Erfassungseinheit eine Sterilisationseinheit bildet.

6. Vorrichtung nach Anspruch 5, **dadurch gekennzeichnet, dass** die Erfassungsröhre (41) aus einem doppelwandigen Rohr besteht, das eine Spritzdüse für die Zerstäubung eines Sterilisationsmediums in dem Innenhohlraum des rohrförmiges Schneidmessers bildet.

7. Vorrichtung nach einem der Ansprüche 4 bis 6, **dadurch gekennzeichnet, dass** die Erfassungsröhre (41) fest mit einem Zwischenrohr (44) verbunden ist, das mit Ringen (441, 442) ausgestattet und in einem mit Gleitlagern (461, 462) ausgestatteten festen Führungsrohr (44) gleitbeweglich gelagert ist, wobei die elastischen Rückstellmittel eine Zugfeder (48) aufweisen, die am unteren Ende (44b) des Zwischenrohrs und am oberen Ende (46a) des festen Führungsrohrs befestigt ist und die Ringe in Anschlag an den Gleitlagern elastisch beaufschlagt sind, wobei der Sensor die Verlagerung des Zwischenrohrs bezüglich des festen Führungsrohrs erfasst.

8. Erfassungseinrichtung für eine Schneidvorrichtung nach einem der Ansprüche 1 bis 7, **dadurch gekennzeichnet, dass** sie eine Erfassungseinheit (4) aufweist, die eine einziehbare Röhre (41) aufweist, die von elastischen Rückstellmitteln in eine Ruhestellung beaufschlagt wird, sowie einen Sensor (53), der eine Verlagerung der einziehbaren Röhre aus ihrer Ruhestellung erfassen kann, wobei die Erfassungseinheit (4) ein Gehäuse (42) aufweist, in welchem die Erfassungsröhre (41) und Sterilisationsmittel (41, 51) angeordnet sind.

9. Erfassungseinrichtung nach Anspruch 8, **dadurch gekennzeichnet, dass** die Erfassungsröhre (41) aus einem doppelwandigen Rohr besteht, das eine Spritzdüse für die Zerstäubung eines Sterilisationsmediums in dem Innenhohlraum des rohrförmiges Schneidmessers bildet.

10. Erfassungseinrichtung nach Anspruch 8 oder 9, **dadurch gekennzeichnet, dass** die Erfassungsröhre (41) fest mit einem Zwischenrohr (44) verbunden ist, das mit Ringen (441, 442) ausgestattet und in einem mit Gleitlagern (461, 462) ausgestatteten festen Führungsrohr (44) gleitbeweglich gelagert ist, wobei die elastischen Rückstellmittel eine Zugfeder (48) aufweisen, die am unteren Ende (44b) des Zwischenrohrs und am oberen Ende (46a) des festen Führungsrohrs befestigt ist und die Ringe in Anschlag an den Gleitlagern elastisch beaufschlagt sind, wobei der Sensor die Verlagerung des Zwischenrohrs bezüglich des festen Führungsrohres erfasst.
